# FASCICULE DE BREVET EUROPEEN

(11) **EP 1 139 719 B1**
(45) Date de publication et mention de la délivrance du brevet: **05.03.2003**
(21) Numéro de dépôt: 99958305.7
(22) Date de dépôt: 10.12.1999
(51) Int. Cl.: A01G 11/00

(54) **PROCEDE DE GESTION D'UN CYCLE DE DESINFECTION DES SOLS PAR LA VAPEUR ET MACHINE DE DESINFECTION POUR LA MISE EN OEUVRE DU PROCEDE**
VERFAHREN ZUR VERWALTUNG EINES BODENDESINFIZIERUNGSZYKLUS MIT DAMPF UND DESINFIZIERUNGSVORRICHTUNG ZUR DURCHFÜHRUNG DES VERFAHRENS
METHOD FOR MANAGING A SOIL DISINFECTION CYCLE WITH VAPOUR AND DISINFECTING MACHINE FOR IMPLEMENTING SAID METHOD

(30) Priorité: 15.12.1998 FR 9815971
(43) Date de publication de la demande: 10.10.2001
(73) Titulaire: Regero, 44334 Nantes Cedex 03 (FR)
(72) Inventeur: PINSON, Dominique, F-44000 Nantes (FR)
(74) Mandataire: Catherine, Alain
(86) Numéro de dépôt international: FR9903104
(87) Numéro de publication internationale: WO00035268

(56) Documents cités:
- CH-A- 399 054
- DATABASE WPI Section Ch, Week 9439 Derwent Publications Ltd., London, GB; Class A97, AN 94-312738 XP002111512 & JP 06 237678 A (TEKUNO SOKEN YG), 30 août 1994 (1994-08-30)

## Description

La présente invention concerne la désinfection des sols par la vapeur, procédé utilisé notamment en agriculture et surtout pour le maraîchage.

Elle concerne plus particulièrement un procédé de gestion d'un cycle de désinfection et le matériel utilisé pour la mise en oeuvre du procédé.

La désinfection des sols par l'utilisation de la vapeur requiert une certaine rigueur dans la conduite du cycle afin d'obtenir les résultats escomptés. Ces résultats sont liés principalement à deux paramètres: la profondeur du traitement et la température de traitement à la profondeur voulue.

La vapeur est produite par un générateur du genre chaudière et elle est amenée dans des coffres posés sur le sol. La température de cette vapeur permet d'obtenir un traitement de la terre à une température de l'ordre de 85°.

La profondeur du traitement dépend essentiellement de la nature des cultures effectuées sur les parcelles de terre traitée. Cette profondeur peut varier par exemple de 6 cm pour des cultures de radis à 12 cm pour la culture des carottes.

La conduite de l'opération de désinfection est généralement effectuée de façon empirique car elle concerne des étendues relativement modestes, mais les contraintes de plus en plus importantes au niveau de l'utilisation de produits et substances chimiques de traitement des sols, font que la désinfection par la vapeur connaît un certain essor et les surfaces traitées de cette façon deviennent de plus en plus importantes.

Pour améliorer le rendement de ce procédé, il est intéressant de pouvoir gérer plus efficacement toute cette opération de désinfection.

L'invention propose donc un procédé de gestion d'un cycle de désinfection afin d'optimiser le temps pour réaliser cette désinfection selon les conditions requises, et elle concerne également l'installation et le matériel qui permettent la mise en oeuvre du procédé. Cette installation peut être associée à une machine autonome permettant de traiter sans intervention humaine, des parcelles de terre rectilignes, relativement importantes. L'intervention d'un opérateur s'effectue à chaque extrémité de la parcelle à traiter, pour positionner la machine sur une autre parcelle ou un autre rang à traiter.

Les économies réalisées peuvent être importantes aussi bien au niveau de la consommation de fioul, qu'au niveau de la consommation d'eau.

Le procédé de gestion selon l'invention consiste: - à contrôler la température du sol à une profondeur choisie selon la nature du traitement de désinfection, pendant l'opération de désinfection, - à déclencher l'arrêt de l'injection de la vapeur dans le (ou les) coffre qui couvre la parcelle à désinfecter, lorsque la température atteinte dans le sol correspond à la température programmée pour le traitement du sol en question.

Pour apporter à la fois une plus grande précision et surtout une plus grande fiabilité, le procédé consiste: - à effectuer plusieurs contrôles de températures pendant l'opération de désinfection, à plusieurs endroits bien choisis de la parcelle de terre à désinfecter, quatre endroits par exemple, et - à déclencher l'arrêt de l'injection de vapeur lorsque la température programmée est atteinte par une majorité des contrôles, trois par exemple.

Cette particularité permet notamment d'obtenir des résultats exploitables même lorsque l'une des valeurs obtenues ne correspond pas à la température programmée, du fait d'un incident causé par exemple par la présence d'un caillou ou autre.

Le procédé consiste également à fixer un temps minimum et un temps maximum de conduite de l'opération de désinfection et à prendre en compte les informations concernant la température de traitement atteinte, uniquement dans cette plage de temps entre le temps minimum et le temps maximum, de façon à optimiser la durée de l'opération de désinfection dans cette plage préalablement définie.

Ce procédé offre ainsi une très grande efficacité et garantit le traitement puisqu'en cas d'incident au niveau du contrôle des températures de traitement, le procédé impose soit une durée minimale de traitement même lorsque les informations sur les températures permettent de stopper l'injection de vapeur, soit une durée maximale même lorsque les informations sur les températures atteintes ne permettent pas l'arrêt de l'injection de vapeur dans les coffres.

L'invention concerne également l'installation et le matériel pour la mise en oeuvre du procédé et en particulier les coffres de traitement munis d'au moins un capteur de température en forme de sonde disposée à l'intérieur du coffre, laquelle sonde est associée à un support approprié de façon à pouvoir s'enfoncer dans le sol jusqu'à une profondeur qui correspond au moins à celle où l'on souhaite obtenir une désinfection.

Selon une autre disposition de l'invention, chaque sonde est associée à un dispositif support qui lui permet de conserver un débattement vertical afin de s'escamoter automatiquement en cas de rencontre d'un obstacle, caillou ou autre.

Toujours selon l'invention, la sonde comporte un système de nettoyage qui est mis en oeuvre entre chaque phase de traitement, pour éviter l'accumulation de terre, lequel système consiste en une petite buse de pulvérisation d'eau, et en particulier d'eau chaude prélevée sur les moyens de production de vapeur et en particulier sur la chaudière.

Selon une autre disposition de l'invention, l'installation comprend également un boîtier électronique de gestion du cycle de traitement, lequel boîtier est relié à la sonde ou aux différentes sondes et comporte des moyens de traitement des informations données par la ou les sondes pour mettre en oeuvre la vanne d'injection de vapeur, c'est-à-dire commander son ouverture ou sa fermeture.

Le boîtier de gestion comporte également des moyens pour programmer la température de traitement à prendre en compte. Il comporte aussi des moyens pour programmer une durée minimale et une durée maximale de traitement et pour gérer les informations fournies par la ou les sondes afin d'optimiser cette durée de traitement dans la plage fixée par lesdites durées mini et maxi.

L'installation selon l'invention est de préférence associée à un châssis automoteur qui comporte un générateur de vapeur, des moyens pour porter et déplacer verticalement le ou les coffres de désinfection ainsi que des moyens moteurs permettant l'avance automatique dudit châssis, l'ensemble étant géré par un automate qui prend en compte les informations du boîtier de gestion du cycle de traitement et commande les différentes opérations et mouvements.

L'invention sera encore détaillée à l'aide de la description suivante et des dessins annexés, donnés à titre indicatif et dans lesquels :
- la figure 1 représente, schématiquement, un coffre en position normale de désinfection sur une parcelle de terre et les moyens qui permettent de gérer le cycle de traitement ;
- la figure 2 représente à une échelle plus grande, un mode de réalisation d'un support de capteur de température situé dans le coffre de désinfection.

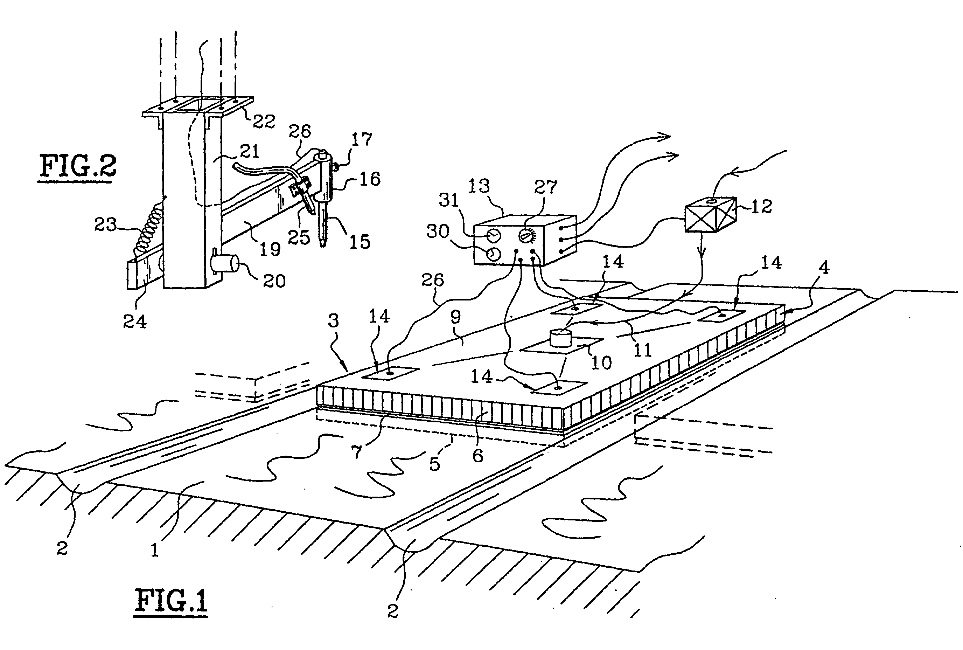

Sur la bande de terre 1 représentée figure 1, qui est comprise entre des passe-pieds 2, on remarque un coffre 3 en position normale de désinfection. La jupe périphérique 4 du coffre comporte une partie 5 enfoncée dans le sol de façon à former étanchéité, et une partie 6 située au-dessus du sol ; un repli 7 sépare les deux parties 5 et 6 et permet de limiter l'enfoncement dans le sol.

La paroi supérieure 9 du coffre reçoit, au niveau de sa partie centrale 10, la tubulure 11 d'amenée de vapeur. Cette tubulure 11 est connectée à un générateur de vapeur non représenté, par l'intermédiaire d'une vanne 12.

Cette vanne 12 est commandée au moyen d'un boîtier électronique 13 qui constitue l'automate de gestion du cycle de désinfection.

Pour contrôler l'opération de désinfection, le coffre 3 est équipé de capteurs de température 14 qui se présentent, comme représenté figure 2, sous la forme de sondes 15 du genre à thermocouple, lesquelles sondes sont destinées à pénétrer dans le sol et à s'enfoncer sur une distance qui correspond au moins à la profondeur de la bande de terre à traiter à la température souhaitée.

A cet effet, comme représenté figure 2, la sonde 15 qui se présente sous la forme d'une tige cylindrique, est montée verticalement dans un manchon 16 ; une vis de serrage 17 permet de régler la position de ladite sonde par rapport au coffre, pour faire varier son enfoncement dans le sol et l'adapter à la profondeur du traitement prévu.

Le manchon 16 de la sonde 15 est en fait monté à l'extrémité d'un bras 19, lequel bras est lui-même articulé autour d'un axe horizontal 20 disposé à l'extrémité inférieure d'un support 21, lequel support est fixé à la paroi 9 du coffre 3 par le biais des équerres 22 ou tout autre moyen.

La sonde 15 occupe normalement une position perpendiculaire par rapport au sol mais, du fait du montage du bras 19 sur un axe d'articulation 20, elle présente l'avantage de pouvoir s'escamoter automatiquement si, par exemple, lors de la descente du coffre, elle rencontre un obstacle comme un caillou ou autre.

Le bras 19 occupe une position horizontale par exemple, et il est maintenu dans cette position horizontale au moyen d'un organe élastique 23 du genre ressort ou autre, fixé sur le prolongement arrière 24 dudit bras 19, au-delà de l'axe 20, et sur le support vertical 21.

On remarque, montée sur le bras 19, à proximité de la sonde 15, une petite buse 25 qui permet de nettoyer ladite sonde. Cette buse de pulvérisation 25 est par exemple alimentée avec de l'eau provenant de la chaudière, non représentée.

Ce nettoyage ou rinçage des sondes peut être réalisé entre chaque opération de traitement du sol.

Le coffre 3 comporte de préférence plusieurs capteurs de température. On remarque, figure 1, la présence de quatre capteurs de température repérés 14, disposés approximativement dans les coins du coffre.

Ces différents capteurs 14 sont reliés par les fils 26 au boîtier 13. Le boîtier 13 comporte des moyens 27 qui permettent de programmer et d'afficher le niveau de température à atteindre dans le sol, à la profondeur souhaitée. Pendant le traitement du sol à la vapeur, les sondes 15 des capteurs 14 contrôlent la température d'une façon continue. Lorsque la température dans le sol correspond à celle prévue au niveau de l'afficheur 27, le boîtier de gestion 13 commande la fermeture de la vanne 12 et par conséquent l'arrêt du traitement. Le boîtier 13 fonctionne comme un automate et comporte les moyens adaptés à cette fonction.

Ce boîtier 13 peut également servir pour commander d'autres organes et dispositifs et en particulier les moyens qui permettent de relever le ou les coffres et ensuite les moyens qui permettent de déplacer l'ensemble si ces coffres sont portés par exemple par un engin automoteur. Il commande également le nettoyage des sondes 15 au moyen des buses 25.

Il peut arriver que parmi les capteurs de température 14, l'un de ces capteurs donne des informations erronées, parce que, par exemple, la sonde 15 est détériorée ou bien parce qu'elle n'est pas enfoncée à une profondeur appropriée.

Aussi, au niveau du boîtier de gestion 13, un dispositif approprié du genre microprocesseur, prend en compte un nombre limité d'informations, par exemple trois des informations données par les quatre capteurs 14, abandonnant l'information erronée de l'un des capteurs. Lorsque les informations coïncident avec le niveau de température programmé, le boîtier déclenche la fermeture de la vanne 12 et l'arrêt de l'opération de traitement.

Pour obtenir une bonne désinfection, il faut un traitement pendant plusieurs minutes. Le boîtier 13 comporte une minuterie 30 qui permet de régler un temps minimum de désinfection par exemple de l'ordre de 3 mn. Aussi, quelles que soient les informations données par les capteurs 14, la vanne 12 restera ouverte au moins 3 minutes pour effectuer l'opération de désinfection.

Le boîtier 13 permet également de programmer un temps maximum de traitement. On remarque sur le boîtier une seconde minuterie 31 qui permet de programmer un temps maximum de traitement de l'ordre de 12 minutes par exemple. Ainsi, dans le cas où les informations données par les capteurs 14 au boîtier 13 ne permettent pas à ce dernier de commander la fermeture de la vanne 12, cette fermeture est automatique au bout d'une durée maximum de traitement de l'ordre de 12 minutes.

Ces moyens, du genre minuteries 30 et 31, qui permettent d'établir un temps minimum et un temps maximum de traitement, constituent une garantie au niveau du traitement ; l'optimisation du traitement s'effectue, dans cette plage entre le mini et le maxi, grâce aux capteurs 14 et en particulier aux sondes de température 15. Cette optimisation a pour effet de réduire les consommations d'énergie pour la production de vapeur mais également la consommation d'eau pour la fabrication de la vapeur.

La figure 1 montre un coffre 3 et, en traits mixtes fins, des coffres disposés de part et d'autre.

Ces coffres peuvent effectivement être montés en batterie, portés par un châssis non représenté en forme de poutre, laquelle poutre peut être guidée, s'il s'agit d'une serre, sur des rails suspendus ou, s'il s'agit de cultures en plein champ, être portée par un châssis muni de roues pour se déplacer dans les passe-pieds 2. Le châssis peut être motorisé, commandé par le boîtier 13 qui fait office d'automate général, et il se déplacer pas à pas, d'une distance qui correspond à la longueur du ou des coffres.

Le châssis de l'engin automoteur peut comporter un générateur de vapeur, c'est-à-dire une chaudière, la réserve de fioul et un groupe électrogène.

L'alimentation en eau s'effectue à partir du réseau d'eau au moyen d'un tuyau approprié qui se déplace au fur et à mesure de l'avancement de l'engin.

## Revendications

1. Procédé de gestion d'un cycle de désinfection des sols par de la vapeur d'eau injectée sous pression dans au moins un coffre (3) qui coiffe une parcelle de terre, **caractérisé en ce qu'**il consiste : - à contrôler la température du sol à une profondeur choisie selon le type de traitement souhaité, - à déclencher l'arrêt de l'injection de la vapeur dans ledit coffre, lorsque la température atteinte dans le sol correspond à la température programmée pour le traitement du sol en question.

2. Procédé de gestion d'un cycle de désinfection des sols selon la revendication 1, **caractérisé en ce qu'**il consiste: - à effectuer plusieurs contrôles de température pendant l'opération de traitement, à plusieurs endroits de la parcelle à traiter, quatre endroits par exemple, - à déclencher l'arrêt de l'injection de vapeur lorsque la température programmée est atteinte par une majorité des points de contrôle, trois par exemple.

3. Procédé de gestion d'un cycle de désinfection des sols selon l'une quelconque des revendications 1 ou 2, **caractérisé en ce qu'**il consiste à programmer une plage de temps minimum de désinfection et une plage de temps maximum de désinfection, et à tenir compte des informations provenant des contrôles de température dans et uniquement dans ladite plage entre le minimum et le maximum de temps prévu pour cette désinfection.

4. Installation pour la mise en oeuvre du procédé de gestion d'un cycle de désinfection des sols selon l'une quelconque des revendications 1 à 3, **caractérisée en ce qu'**elle comprend, disposé sur au moins un coffre (3), au moins un capteur de température (14), lequel capteur comporte une sonde (15) du type à thermocouple, dont la position est réglable par rapport audit coffre de façon à donner une information concernant la température prise à une profondeur qui correspond à la profondeur souhaitée pour le traitement.

5. Installation selon la revendication 4, **caractérisée en ce que** la sonde (15) est montée sur un dispositif support par l'intermédiaire d'un bras basculant (19), permettant son escamotage automatiquement en cas de rencontre d'un obstacle, caillou ou autre, avec retour automatique en position par le biais d'un organe élastique, du genre ressort (23).

6. Installation selon la revendication 5, **caractérisée en ce que** la sonde (15) comporte un système de nettoyage qui est mis en oeuvre entre chaque phase de traitement.

7. Installation selon la revendication 6, **caractérisée en ce que** le système de nettoyage de la sonde (15) consiste en une petite buse (25) montée sur le bras (19), alimentée en eau provenant par exemple de la chaudière de production de vapeur.

8. Installation selon l'une quelconque des revendications 4 à 7, **caractérisée en ce qu'**elle comporte plusieurs capteurs (14) reliés à un boîtier électronique (13) faisant office d'automate, au niveau duquel on trouve des moyens (27) permettant de programmer la température du traitement, et des moyens qui permettent de programmer d'une part un temps minimum de traitement et d'autre part un temps maximum de traitement, lequel boîtier comporte des moyens pour commander l'ouverture et la fermeture de la vanne (12) qui sert à alimenter le coffre (3) en vapeur sous pression lorsque le temps mini ou le temps maxi sont atteints ou lorsque la température de traitement est atteinte dans une plage fixée par ces temps mini et maxi.

9. Installation selon la revendication 8, **caractérisée en ce que** le boîtier (13) comporte également des moyens de commande de l'engin qui supporte le ou les coffres (3), de façon à effectuer les opérations de relevage et de descente desdits coffres, ainsi que le déplacement des coffres pas à pas, et le nettoyage des sondes par exemple.

## Patentansprüche

1. Verfahren zur Steuerung eines Desinfektionszyklus für Böden durch unter Druck eingespritzten Wasserdampf in mindestens einen Kasten (3), der eine Erdparzelle bedeckt, **dadurch gekennzeichnet, dass** es darin besteht:
- die Temperatur des Bodens in einer je nach gewünschtem Behandlungstyp ausgewählten Tiefe zu kontrollieren,
- das Beenden des Einspritzens von Dampf in den Kasten auszulösen, wenn die in dem Boden erreichte Temperatur der für die Behandlung des betreffenden Bodens programmierten Temperatur entspricht.

2. Verfahren zur Steuerung eines Desinfektionszyklus für Böden nach Anspruch 1, **dadurch gekennzeichnet, dass** es darin besteht:
- mehrere Temperaturkontrollen während des Behandlungsvorganges an mehreren Stellen der zu behandelnden Parzelle, beispielsweise an vier Stellen, durchzuführen,
- das Beenden des Einspritzens von Dampf auszulösen, wenn die programmierte Temperatur von einer Mehrheit der Kontrollpunkte, beispielsweise drei, erreicht ist.

3. Verfahren zur Steuerung eines Desinfektionszyklus für Böden nach einem der Ansprüche 1 oder 2, **dadurch gekennzeichnet, dass** es darin besteht, einen Mindestzeitbereich für die Desinfektion und einen Höchstzeitbereich für die Desinfektion zu programmieren und die Informationen zu berücksichtigen, die von den Temperaturkontrollen in und nur in dem Bereich zwischen der Mindest- und der Höchstzeit, die für diese Desinfektion vorgesehen ist, stammen.

4. Vorrichtung für die Durchführung des Verfahrens zur Steuerung eines Desinfektionszyklus für Böden nach einem der Ansprüche 1 bis 3, **dadurch gekennzeichnet, dass** sie auf mindestens einem Kasten (3) angeordnet mindestens einen Temperaturfühler (14) umfasst, welcher Fühler eine Sonde (15) vom Typ mit Thermoelement umfasst, deren Position in Bezug auf den Kasten derart einstellbar ist, dass eine Information über die Temperatur geliefert wird, die in einer Tiefe gemessen wurde, die der für die Behandlung gewünschten Tiefe entspricht.

5. Vorrichtung nach Anspruch 4, **dadurch gekennzeichnet, dass** die Sonde (15) auf einer Stützvorrichtung mit Hilfe eines Kipparmes (19) befestigt ist, der ihr automatisches Einziehen beim Treffen auf ein Hindernis, einen Stein oder dergleichen, mit einer automatischen Rückkehr in ihre Position durch die Spannung eines elastischen Elementes von der Art einer Feder (23) ermöglicht.

6. Vorrichtung nach Anspruch 5, **dadurch gekennzeichnet, dass** die Sonde (15) ein Reinigungssystem umfasst, das zwischen zwei Behandlungsvorgängen in Betrieb genommen wird.

7. Vorrichtung nach Anspruch 6, **dadurch gekennzeichnet, dass** das Reinigungssystem der Sonde (15) eine kleine Düse (25) aufweist, die auf dem Kipparm (19) montiert ist und mit Wasser, das von z.B. einem Dampfzeugungskessel erhalten wird, gespeist wird.

8. Vorrichtung nach einem der Ansprüche 4 bis 7, **dadurch gekennzeichnet, dass** sie mehrere Fühler (14) aufweist, die mit einem elektronischen Gehäuse (13), das als Automat fungiert, verbunden sind, an dem Mittel (27), die das Programmieren der Behandlungstemperatur erlauben, und Mittel, die das Programmieren der minimalen Behandlungszeit einerseits und der maximalen Behandlungszeit andererseits erlauben, vorgesehen sind, welches Gehäuse Mittel zum Steuern des Öffnens und Schließens des Ventils (12), das zum Speisen des Kastens (3) mit Dampf unter Druck dient, wenn die minimale Zeit oder wenn die maximale Zeit oder wenn die Behandlungstemperatur in einem durch die minimale und maximale Temperatur festgelegten Bereich erreicht ist, aufweist.

9. Vorrichtung nach Anspruch 8, **dadurch gekennzeichnet, dass** das Gehäuse (13) auch Steuermittel der Maschine aufweist, die den Kasten oder die Kästen (3) trägt, derart, dass die Vorgänge des Anhebens und des Absenkens der Kästen wie auch die schrittweise Versetzung der Kästen und die Reinigung der Sonden beispielsweise ausführbar sind.

## Claims

1. A method of managing a soil disinfection cycle by pressurised water steam injected into at least one coffer (3) covering a plot of land, **characterised in that** it consists : - in controlling the temperature of the soil at a depth selected according to the type of treatment desired, - in stopping the injection of steam into said coffer when the temperature reached in the soil corresponds to the temperature programmed for the treatment of the soil in question.

2. A method of managing a soil disinfection cycle according to claim 1, **characterised in that** it consists :- in performing several temperature checks during the treatment operation, in several points of the plot to be treated, for example four points, - in stopping the injection of steam when the set temperature has been reached by a majority of the check points, for example three.

3. A method of managing a soil disinfection according to any of claims 1 or 2, **characterised in that** it consists in setting a minimum disinfection time window and a maximum disinfection time window, and in taking into account the information from the temperature checks within and solely within said range between the minimum and the maximum times foreseen for said disinfection.

4. A facility for the implementation of the method for managing a soil disinfection cycle according to any of the claims 1 to 3, **characterised in that** it comprises, arranged on at least one coffer (3), at least one temperature sensor (14), which sensor comprises a probe (15) such as a thermocouple, whereof the position is adjustable with respect to said coffer in order to provide with information regarding the temperature measured at a depth which corresponds to the depth requested for the treatment.

5. A facility according to claim 4, **characterised in that** the probe (15) is mounted on a supporting device via a tipping arm (19), enabling automatic retraction thereof when encountering an obstacle, a pebble or other, with automatic recall into position by means of an elastic member, such as a spring (23).

6. A facility according to claim 5, **characterised in that** the probe (15) comprises a cleaning system implemented between each treatment phase.

7. A facility according to claim 6, **characterised in that** the cleaning system of the probe (15) consists in a small nozzle (25) mounted on the arm (19), supplied with water from, for example, the steam generation boiler.

8. A facility according to any of the claims 4 to 7, **characterised in that** it comprises several sensors (14) connected to an electronic box (13) acting as an automaton, by which several means (27) are laid out to set the temperature of the treatment, as well as means which enable to set on the one hand a minimum treatment time and, on the other hand, a maximum treatment time, which box comprises means to control the opening and the closing of the valve (12) used for supplying the coffer (3) with pressurised steam when the minimum time or the maximum time has been reached or when the treatment temperature has been reached within a range set by said minimum and maximum times.

9. A facility according claim 8, **characterised in that** the box (13) also comprises means for controlling the vehicle which supports the coffer(s) (3), in order to perform the lifting and lowering operations of said coffers, as well as the stepwise displacement of the coffers, and the cleaning of the probes for instance.
